# EUROPEAN PATENT SPECIFICATION

(11) **EP 3 491 849 B1**
(45) Date of publication and mention of the grant of the patent: **30.12.2020**
(21) Application number: 17725226.9
(22) Date of filing: 22.05.2017
(51) Int. Cl.: H04W 4/70, H04W 52/02

(54) **METHOD FOR TRANSMITTING DOWNLINK COMMUNICATION DATA FROM A MOBILE COMMUNICATION NETWORK TO A PLURALITY OF INTERNET-OF-THINGS COMMUNICATION DEVICES AND MOBILE COMMUNICATION NETWORK.**
VERFAHREN ZUR ÜBERTRAGUNG VON DOWNLINK-KOMMUNIKATIONSDATEN AUS EINEM MOBILKOMMUNIKATIONSNETZWERK AN MEHRERE INTERNET-DER-DINGE-KOMMUNIKATIONSVORRICHTUNGEN UND MOBILKOMMUNIKATIONSNETZWERK.
PROCÉDÉ DE TRANSMISSION DE DONNÉES DE COMMUNICATION DE LIAISON DESCENDANTE PROVENANT D'UN RÉSEAU DE COMMUNICATION MOBILE À UNE PLURALITÉ DE DISPOSITIFS DE COMMUNICATION INTERNET DES OBJETS ET RÉSEAU DE COMMUNICATION MOBILE.

(30) Priority: 26.07.2016 EP 16181124
(43) Date of publication of application: 05.06.2019
(73) Proprietor: Deutsche Telekom AG, 53113 Bonn (DE)
(72) Inventor: KLATT, Axel, 50999 Köln (DE)
(74) Representative: Schwöbel, Thilo K.
(86) International application number: PCT/EP2017/062218
(87) International publication number: WO 2018/019443

(56) References cited:
- US-A1- 2010 279 700
- US-A1- 2015 296 518
- US-A1- 2016 050 660
- SAMSUNG: "Narrowband IOT - Discussion of Deployment Scenarios", 3GPP DRAFT; R1-155508 NARROWBAND IOT - DISCUSSION OF DEPLOYMENT SCENARIOS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDE , vol. RAN WG1, no. Malmo, Sweden; 20151005 - 20151009 4 October 2015 (2015-10-04), XP051002400, Retrieved from the Internet: URL:http://www.3gpp.org/ftp/Meetings_3GPP_ SYNC/RAN1/Docs/ [retrieved on 2015-10-04]

## Description

### BACKGROUND

The present invention relates to a method for transmitting downlink communication data from a mobile communication network to a plurality of internet-of-things communication devices, the mobile communication network comprising an access network and a core network, wherein the access network comprises at least one radio cell and a base station entity associated with the at least one radio cell, wherein the communication data are transmitted using a radio interface between the base station entity and the plurality of internet-of-things communication devices, the radio interface having a plurality of physical resource blocks such that each physical resource block of the plurality of physical resource blocks corresponds to specific radio transmission resources, having a defined frequency range.

Furthermore, the present invention relates to a mobile communication network for transmitting downlink communication data from the mobile communication network to a plurality of internet-of-things communication devices, the mobile communication network comprising an access network and a core network, wherein the access network comprises at least one radio cell and a base station entity associated with the at least one radio cell, wherein the communication data are transmitted using a radio interface between the base station entity and the plurality of internet-of-things communication devices, the radio interface having a plurality of physical resource blocks such that each physical resource block of the plurality of physical resource blocks corresponds to specific radio transmission resources, having a defined frequency range.

Additionally, the present invention relates to a system for transmitting downlink communication data from a mobile communication network to a plurality of internet-of-things communication devices,
the system comprising the mobile communication network and the plurality of internet-of-things communication devices, and the mobile communication network comprising an access network and a core network, wherein the access network comprises at least one radio cell and a base station entity associated with the at least one radio cell,
wherein the communication data are transmitted using a radio interface between the base station entity and the plurality of internet-of-things communication devices, the radio interface having a plurality of physical resource blocks such that each physical resource block of the plurality of physical resource blocks corresponds to specific radio transmission resources, having a defined frequency range.

Additionally, the present invention relates to an internet-of-things communication device suitable for receiving downlink communication data from a mobile communication network according to the inventive method.

Furthermore, the present invention relates to a program and to a computer program product for transmitting downlink communication data from a mobile communication network to a plurality of internet-of-things communication devices according to the inventive method, mobile communication network, and system.

With the Internet of Things, all kinds of "things" (sensors, industrial systems, cars, meters, etc.) will be connected or will connect to the internet and will be able to communicate with each other or with an application server. It is predicted that by the beginning or the early years of the next decade 20 to 50 billion devices will be wirelessly connected in the Internet of Things (loT), and some analysts even predict that the number of such connected devices (or radio devices or internet-of-things communication devices) will grow into the tens of billions until the end of this decade.

Current cellular radio technologies like LTE /LTE-A (Long Term Evolution / Long Term Evolution advanced) have been developed to achieve highest throughput with extremely efficient spectrum usage for mobile broadband. Battery powered low end internet-of-things devices have a totally different service characteristic and much stricter requirements on power consumption and cost. Therefore highly optimized radio technologies for this low end M2M or internet-of-things segment need to be provided, having especially the following requirements: significantly lowered cost of modules and infrastructure (i.e. no dedicated network required for internet-of-things communication devices), increased battery lifetime for devices (e.g. of 10+ years with 2 AA batteries), increased coverage of +20 dB compared to GSM (to allow also deep indoor deployment), significantly streamlined technology to avoid overhead and complexity (impact on Radio and core network architecture).

One such technology is the narrow band cellular internet-of-things technology that uses 180kHz downlink carriers based on OFDM (Orthogonal Frequency Division Multiplex) technology combined with an FDMA (Frequency Division Multiple Access) based uplink carrier.

Documents US 2015/296518 A1 (YI YUNJUNG [KR] ET AL) 15 October 2015 (2015-10-15) and US 2010/279700 A1 (KIM HYUN-JAE [KR] ET AL) 4 November 2010 (2010-11-04) are part of the relevant prior art.

### SUMMARY

It is an object of the present invention to transmit downlink communication data from a mobile communication network to a plurality of internet-of-things communication devices such that coverage of the internet-of-things communication devices are as much ensured as possible such that existing infrastructure and air interface resources of the cellular mobile communication network are able to be used, and the internet-of-things communication devices are able to be reached by radio signals of the cellular mobile communication network.

The object of the present invention is achieved by a method according to independent claim 1.

It is thereby advantageously possible according to the present invention that a scheduling regarding the transmission of the downlink communication data is possible such that coverage of a multitude of different internet-of-things communication devices can be enhanced in an efficient manner, i.e. without unnecessarily using resources of the air interface (within a radio cell of the mobile communication network) for purposes of the internet-of-things communication devices (rather than for providing other communication services to other user equipment connected to the mobile communication network).

According to the present invention, downlink communication data are transmitted from a mobile communication network (i.e. typically from a base station entity or an access point of the or an access network of the mobile communication network) to the plurality of internet-of-things communication devices that are reachable (i.e. are located within the coverage area of the base station entity of the access point) by the mobile communication network.

According to the present invention, the mobile communication network comprises an access network and a core network. The access network comprises at least a radio cell and a base station entity associated with the radio cell, the base station entity typically comprising an antenna equipment. The antenna equipment is used for transmitting the downlink communication data to the (typically) multitude of internet-of-things communication devices within the radio cell considered. In order to transmit the downlink communication device, radiofrequency electromagnetic signals are used, these signals being transmitted by the antenna equipment of the base station entity towards the internet-of-things communication devices.

Furthermore according to the present invention, the communication data are transmitted to the internet-of-things communication devices using a radio interface between the base station entity and the plurality of internet-of-things communication devices. The radio interface (or air interface) typically has a plurality of physical resource blocks or transmission slots such that each physical resource block of the plurality of physical resource blocks corresponds to specific radio transmission resources, having a defined frequency range as well as, typically, being defined in the time domain.

The narrowband internet-of-things access technology typically also provides the possibility to choose or to adapt the transmission power level that is assigned and/or associated, by the base station entity, to a physical resource block of the plurality of physical resource blocks, especially to at least one physical resource block being used to communicate with the internet-of-things communication devices.

Typically, a relatively large number of internet-of-things communication devices are present within a radio cell. Some of these internet-of-things communication devices experience a better radio coverage from the base station entity than others. According to the present invention, a scheduling decision is taken, differentiating between such internet-of-things communication devices having different coverage conditions within the radio cell considered, hence we consider at least a first internet-of-things communication device, and at least a second internet-of-things communication device (having different coverage or radio transmission conditions). The different coverage conditions are reflected in a coverage information or a coverage class information that varies between the different internet-of-things communication devices, especially between the first and second internet-of-things communication device, i.e. the base station entity receives or obtains such a coverage information or a coverage class information regarding the first internet-of-things communication device, and the coverage information or coverage class information is different from the coverage information or coverage class information regarding the second internet-of-things communication device (due to the different coverage conditions of the two internet-of-things communication devices considered). It shall be assumed here that the coverage information or the coverage class information regarding the first and second internet-of-things communication devices indicate a lower coverage class or a lower coverage level (i.e. worse coverage conditions) of the first internet-of-things communication device compared to the second internet-of-things communication device. This means, e.g., that the first internet-of-things communication device is further away from the base station entity or it is located inside a building so that worse radio conditions apply.

According to the present invention, each internet-of-things communication device receives its specific data, i.e. the downlink communication data comprise a first part that is intended to be transmitted to the first internet-of-things communication device, and a second part that is intended to be transmitted to the second internet-of-things communication device.

According to the present invention, it is supposed that
-- the base station entity not only uses one physical resource block (or a first physical resource block) to transmit the downlink communication data (i.e. the first part and the second part thereof) but also an additional physical resource block (or second physical resource block) of the radio interface, and that
-- the transmission power level assigned and/or associated to the physical resource block (or first physical resource block) is higher compared to the transmission power level assigned and/or associated to the additional physical resource block (or second physical resource block).
In such a situation, a scheduling decision is taken such that the first part of the downlink communication data (i.e. intended to be transmitted to the first internet-of-things communication device) is transmitted, by the base station entity, using the physical resource block (or first physical resource block), and the second part of the downlink communication data (i.e. intended to be transmitted to the second internet-of-things communication device) is transmitted, by the base station entity, using the additional physical resource block (or second physical resource block).

Thereby, it is advantageously possible to use the higher transmission power level to reach the first internet-of-things communication device, having the poorer radio coverage condition (compared to the second internet-of-things communication device, according to the assumption). The use of the additional physical resource block corresponds to using a "multiple physical resource block feature" of narrowband internet-of-things access technology. Thereby, it is possible to schedule downlink transmissions for internet-of-things communication devices on the additional physical resource block, wherein the additional physical resource block does not provide any control information, and cannot be used alone (i.e. without the one (or first) physical resource block, also called anchor physical resource block). However, for a particular internet-of-things communication device, corresponding data (to be transmitted to that internet-of-things communication device) is either transmitted using the anchor physical resource block or using the additional physical resource block.

Additionally to providing the internet-of-things functionality, the mobile communication network (and hence typically the base station entities) provides mobile communication services - involving mobile communication data having comparably high bitrates of at least 9,6 kBd (9600 bits per second) and using the antenna equipment or a further antenna equipment of the base station entity - to ("normal") mobile subscribers or user equipments of the mobile communication network, wherein the air interface between the base station entity and the mobile subscribers comprises a plurality of radio channels within at least one frequency band to provide the mobile communication services.

According to an embodiment of the present invention, the transmission power level of the physical resource block is higher compared to the transmission power level of the additional physical resource block, due to the physical resource block being operated, by the base station entity, in a power boosted mode, the power boosted mode especially corresponding to a transmission power level being increased by 1 dB or by 2 dB or by 3 dB or by 4 dB or by 5 dB or by 6 dB compared to all or at least part of the plurality of physical resource blocks.

Thereby, it is advantageously possible to realize a better coverage, especially for those internet-of-things communication device experiencing poor coverage conditions, without unduly reducing or disturbing data transmission being performed on the other physical resource blocks using a certain spectral region or frequency range. This is especially true in case that the physical resource block being boosted (i.e. the anchor physical resource block) is part of number of physical resource blocks being used realizing OFDM technology (such as in LTE applications).

According to the present invention, the transmission power level of the additional physical resource block is lower compared to the transmission power level of the physical resource block, due to the additional physical resource block being operated in a guardband portion of the frequency range used, by the base station entity, for the physical resource blocks.

Thereby, it is advantageously possible that also the guardband can be used albeit at a lower transmission power level; however, for such internet-of-things communication devices having a comparatively good coverage situation, such reduced transmission power level is perfectly sufficient.

According to a further embodiment of the present invention, the physical resource block serves as an anchor physical resource block and contains or carries at least one narrowband physical control channel, especially the narrowband physical broadcast channel, and wherein the additional physical resource block serves as a complementary physical resource block and contains or carries the narrowband physical downlink shared channel.

Thereby, it is advantageously possible that the additional physical resource block only serves as additional or auxiliary physical resource block, and does not provide any control information (unlike to the situation of the anchor physical resource block).

According to still a further embodiment of the present invention, the coverage class or coverage level of the first internet-of-things communication device and the coverage class or coverage level of the second internet-of-things communication device, as well as the coverage information or a coverage class information regarding the first and second internet-of-things communication device are related to the coupling loss or the maximum coupling loss of the radio transmission between the base station entity, and the first and/or second internet-of-things communication device, respectively.

Thereby, it is advantageously possible according to the present invention that the determined coupling loss (or maximum coupling loss) determines the respective coverage information or a coverage class information (applicable to the internet-of-things communication device considered), and, as a consequence, whether that internet-of-things communication device receives its part of the downlink communication data using the anchor physical resource block or using the additional physical resource block.

In another embodiment of the invention, the coverage information or coverage class information regarding the first and second internet-of-things communication device are related to one coverage class or coverage level out of a set of coverage classes or coverage levels, the set of coverage classes or coverage levels comprising at least a first coverage class or first coverage level, especially relating to extreme coverage, a second coverage class or second coverage level, especially relating to extended coverage, and a third coverage class or third coverage level, especially relating to normal coverage.

By means of using at least three different coverage classes or coverage levels, it is advantageously possible to take the scheduling decision in an efficient manner.

Furthermore, the present invention relates to a mobile communication network according to independent claim 6.

Thereby, it is advantageously possible to provide a mobile communication network that provides the advantages of the inventive method.

Furthermore, the present invention relates to a system according to independent claim 7.

Thereby, it is advantageously possible to provide a system that provides the advantages of the inventive method.

Additionally, the present invention relates to a program according to independent claim 8.

Still additionally, the present invention relates to a storage medium according to independent claim 9.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

**Figure 1** schematically illustrate a mobile communication network comprising a radio cell being served by a base station entity, a plurality of internet-of-things communication devices being served by the mobile communication network.
**Figure 2** schematically illustrates a number of physical resource blocks comprising an anchor physical resource block and an additional physical resource block.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

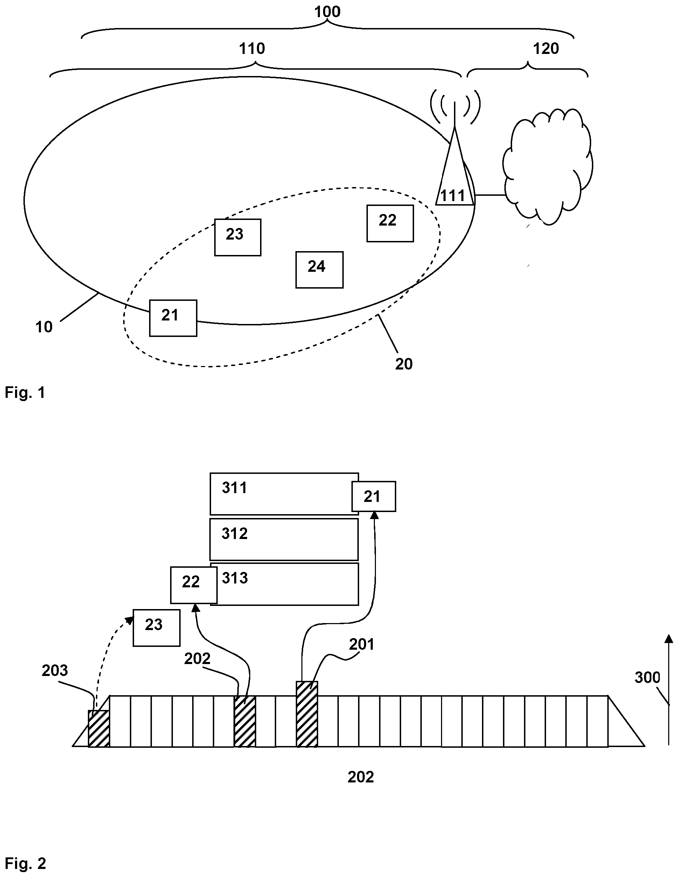

In **Figure 1** a mobile communication network 100 comprising a radio cell 10 being served by a base station entity 111 is schematically shown. In the example shown, the mobile communication network 100 comprises an access network 110 and a core network 120. The mobile communication network 100 is preferably a cellular telecommunications network comprising typically a plurality of network radio cells, one of which is represented in Figure 1 by means of a solid line and reference sign 10. In the mobile communication network 100, typically a plurality of mobile subscribers (or user equipments) are camping on the telecommunications network 100 within the network radio cell 10, i.e. the mobile subscribers are connected or are camping on a base station entity 111 serving the radio cell 10; however, such "normal" mobile subscribers (or user equipment) are not represented in Figure 1. In addition to such "normal" mobile subscribers (or user equipments), a certain number of internet-of-things communication devices 20 are also connected with the base station entity 111. In Figure 1, a first internet-of-things communication device 21, a second internet-of-things communication device 22, a third internet-of-things communication device 23, and fourth internet-of-things communication device 24 are schematically shown. The base station entity 111 is typically a base station, e.g. a NodeB or an eNodeB base transceiver station. The mobile communication network 100 is configured to provide mobile communication services to the mobile subscribers (or user equipments) within the radio cell 10 of the mobile communication network 100. Preferably, mobile communication data (related to the mobile communication services) are transmitted between the mobile subscribers and the mobile communication network via the base station entity 111, wherein the mobile communication data are transmitted with comparably high bitrates of at least 9,6 kBd (9600 bits per second). The air interface between the base station entity 111 and the mobile subscribers comprises a plurality of frequency channels within at least one frequency band to provide the mobile communication services.

The core network 120 is only schematically shown by means of a cloud representation. The public land mobile network 100 (especially the core network 120) comprises typically various network elements such as an MSC (Mobile Switching Center), a SGSN (Serving GPRS Support Node), a MME (Mobility Management Entity), a PDN-GW (Packet Data Network-Gateway) preferably a plurality of network elements thereof.

According to the present invention, a plurality of internet-of-things communication devices 20 are located within the network radio cell 10, i.e. the internet-of-things communication devices 20 are at least able to be connected to the base station entity 111 or at least a component thereof.

The internet-of-things communication devices 20 are configured to exchange radiofrequency electromagnetic signals which are received and/or transmitted by the base station entity 111, typically transmitting - in uplink direction, i.e. towards the base station entity - small and infrequent communication data. However, in downlink direction, i.e. from the base station entity 111 to the internet-of-things communication devices 20, the need might occur (typically sporadically) to transmit larger chunks of data (to each one of the internet-of-things communication devices 20, individually), e.g. in order to perform a firmware update or the like.

According to the present invention, the transmission of these downlink communication data are able to be scheduled in an efficient manner.

In **Figure 2****,** a number of physical resource blocks 200 are schematically shown. Figure 2 is intended to represent the situation of the physical resource blocks 200 corresponding to LTE physical resource blocks, using OFDM technology. The physical resource block 200 comprise a physical resource block designated by reference sign 201, a physical resource block designated by reference sign 202, and a physical resource block designated by reference sign 203 (being part of the guardband of the considered LTE frequency range, comprising the physical resource blocks 200).

Furthermore, Figure 3 shows a first coverage level 311, a second coverage level 312, and a third coverage level 313. The first coverage level 311 corresponds to the poorest radio coverage situation compared to the second and third coverage levels 312, 313. The first internet-of-things communication device 21 has or experiences a radio coverage corresponding to the first coverage level 311, the second internet-of-things communication device 22 has or experiences a radio coverage corresponding to the third coverage level 313, and the third internet-of-things communication device 23 has or experiences a radio coverage corresponding to a coverage level being even better than the third coverage level 313.

In the exemplary situation or use case shown in Figure 2, the physical resource block 201 serves as anchor physical resource block (being operated in boosted mode which is schematically represented by means of reference sign 300 illustrating the transmission power level 300), and the physical resource block 202 serves as additional physical resource block (physical resource block 202 not being boosted but having "normal" or regular transmission power level 300). By means of the anchor physical resource block 201, the first part of the downlink communication data (intended to be transmitted to the first internet-of-things communication device 21) is transmitted (illustrated by an arrow towards the first internet-of-things communication device 21 in Figure 2), whereas by means of the additional physical resource block 202, the second part of the downlink communication data (intended to be transmitted to the second internet-of-things communication device 22) is transmitted (illustrated by an arrow towards the second internet-of-things communication device 22 in Figure 2). Hence, depending on the coverage level, the internet-of-things communication device is in or experiences, the scheduling on the additional physical resource block is performed only for the better coverage levels, as the power boosting is not available and the number of retransmissions would be too high for reaching a device in extreme coverage conditions; those internet-of-things communication devices should preferably be scheduled from the anchor physical resource block.

In a typical inband deployment of the narrowband internet-of-things technology, power boosting is restricted to a single physical resource block which is the anchor physical resource block. The additional physical resource block is often not power boosted, e.g. as a result of non-availability of power budget, etc.

In an alternative situation, physical resource block 203 is used (as alternative physical resource block) instead of using physical resource block 202 (while physical resource block 201 still holds the role of anchor physical resource block). This is conceivable, e.g. in case that the lower transmission power level of the physical resource block 203 is nevertheless able to reach at least the internet-of-things communication devices of the third coverage level 313. In a further alternative scenario, physical resource block 203 is not used instead of using physical resource block 202 (as additional physical resource block) but in addition to using physical resource block 202 as additional physical resource block, i.e. while physical resource block 201 still holds the role of anchor physical resource block, there are two additional physical resource blocks, namely physical resource blocks 202 and 203.

According to still another embodiment, physical resource block 202 (which is not boosted) could be used as anchor physical resource block, and physical resource block 203 (being located in the guardband) could be used as additional physical resource block to physical resource block 202. Especially in the guardband, it is possible that the maximum transmission power level 300 cannot be set very high, maybe not even as high as the normal transmission power level 300 of the other (or typical) physical resource block. Thus, such a physical resource block, located in the guardband, is used as additional physical resource block for scheduling of the very close internet-of-things communication devices (i.e. those in good coverage).

## Claims

1. Method for transmitting downlink communication data from a mobile communication network (100) to a plurality of internet-of-things communication devices (20),
the mobile communication network (100) comprising an access network (110) and a core network (120), wherein the access network (110) comprises at least one radio cell (10) and a base station entity (111) associated with the at least one radio cell (10),
wherein the communication data are transmitted using a radio interface between the base station entity (111) and the plurality of internet-of-things communication devices (20), the radio interface having a plurality of physical resource blocks (200) such that each physical resource block of the plurality of physical resource blocks (200) corresponds to specific radio transmission resources, having a defined frequency range,
wherein a transmission power level (300) is assigned and/or associated, by the base station entity (111), to each physical resource block of the plurality of physical resource blocks (200),
wherein the plurality of internet-of-things communication devices (20) at least comprises a first internet-of-things communication device (21), and at least a second internet-of-things communication device (22),
wherein the base station entity (111) receives or obtains a coverage information or a coverage class information regarding the first internet-of-things communication device (21) and regarding the second internet-of-things communication device (22), the coverage information or the coverage class information regarding the first and second internet-of-things communication devices (21, 22) indicating a lower coverage class or a lower coverage level (311, 312, 313) of the first internet-of-things communication device (21) compared to the second internet-of-things communication device (22),
wherein, in order to transmit a first part of the downlink communication data to the first internet-of-things communication device (21) and a second part of the downlink communication data to the second internet-of-things communication device (22), the method comprises the steps of:
-- in a first step, a physical resource block (201) and an additional physical resource block (202) are defined by the base station entity (111) to transmit the first and second part of the downlink communication data, wherein the transmission power level (300) assigned and/or associated to the physical resource block (201) is higher compared to the transmission power level (300) assigned and/or associated to the additional physical resource block (202),
-- in a second step, subsequent to the first step, the first part of the downlink communication data is transmitted, by the base station entity (111), using the physical resource block (201), and the second part of the downlink communication data is transmitted, by the base station entity (111), using the additional physical resource block (202),
the method being **characterized in that** the transmission power level (300) of the additional physical resource block (202) is lower compared to the transmission power level (300) of the physical resource block (201), due to the additional physical resource block (202) being operated in a guardband portion of the frequency range used, by the base station entity (111), for the physical resource blocks (200).

2. Method according to claim 1, wherein the transmission power level (300) of the physical resource block (201) is higher compared to the transmission power level (300) of the additional physical resource block (202), due to the physical resource block (201) being operated, by the base station entity (111), in a power boosted mode, the power boosted mode especially corresponding to a transmission power level (300) being increased by 1 dB or by 2 dB or by 3 dB or by 4 dB or by 5 dB or by 6 dB compared to all or at least part of the plurality of physical resource blocks (200).

3. Method according to one of the preceding claims, wherein the physical resource block (201) serves as an anchor physical resource block and contains or carries at least one narrowband physical control channel, especially the narrowband physical broadcast channel, and wherein the additional physical resource block (202) serves as a complementary physical resource block and contains or carries the narrowband physical downlink shared channel.

4. Method according to one of the preceding claims, wherein the coverage class or coverage level (311, 312, 313) of the first internet-of-things communication device (21) and the coverage class or coverage level (311, 312, 313) of the second internet-of-things communication device (22), as well as the coverage information or a coverage class information regarding the first and second internet-of-things communication device (21, 22) are related to the coupling loss or the maximum coupling loss of the radio transmission between the base station entity (111), and the first and/or second internet-of-things communication device (21, 22), respectively.

5. Method according to one of the preceding claims, wherein the coverage information or coverage class information regarding the first and second internet-of-things communication device (21, 22) are related to one coverage class or coverage level out of a set of coverage classes or coverage levels, the set of coverage classes or coverage levels comprising at least a first coverage class or first coverage level (311), especially relating to extreme coverage, a second coverage class or second coverage level (312), especially relating to extended coverage, and a third coverage class or third coverage level (313), especially relating to normal coverage.

6. Mobile communication network (100) configured to transmit downlink communication data from the mobile communication network (100) to a plurality of internet-of-things communication devices (20),
the mobile communication network (100) comprising an access network (110) and a core network (120), wherein the access network (110) comprises at least one radio cell (10) and a base station entity (111) associated with the at least one radio cell (10),
wherein the mobile communication network is configured to transmit the communication data using a radio interface between the base station entity (111) and the plurality of internet-of-things communication devices (20), the radio interface having a plurality of physical resource blocks (200) such that each physical resource block of the plurality of physical resource blocks (200) corresponds to specific radio transmission resources, having a defined frequency range,
wherein the base station entity is configured to assign and/or associate a transmission power level (300) to each physical resource block of the plurality of physical resource blocks (200),
wherein the plurality of internet-of-things communication devices (20) at least comprises a first internet-of-things communication device (21), and at least a second internet-of-things communication device (22),
wherein the base station entity (111) is configured to receive or obtain a coverage information
or a coverage class information regarding the first internet-of-things communication device (21) and regarding the second internet-of-things communication device (22), the coverage information or the coverage class information regarding the first and second internet-of-things communication devices (21, 22) indicating a lower coverage class or a lower coverage level (311, 312, 313) of the first internet-of-things communication device (21) compared to the second internet-of-things communication device (22), wherein, in order to transmit a first part of the downlink communication data to the first internet-of-things communication device (21) and a second part of the downlink communication data to the second internet-of-things communication device (22), the mobile communication network (100) is configured such that:
-- a physical resource block (201) and an additional physical resource block (202) are defined by the base station entity (111) to transmit the first and second part of the downlink communication data, wherein the transmission power level (300) assigned and/or associated to the physical resource block (201) is higher compared to the transmission power level (300) assigned and/or associated to the additional physical resource block (202),
-- the first part of the downlink communication data is transmitted, by the base station entity (111), using the physical resource block (201), and the second part of the downlink communication data is transmitted, by the base station entity (111), using the additional physical resource block (202),
the mobile communication network being **characterized in that** the transmission power level (300) of the additional physical resource block (202) is lower compared to the transmission power level (300) of the physical resource block (201), due to the additional physical resource block (202) being operated in a guardband portion of the frequency range used, by the base station entity (111), for the physical resource blocks (200).

7. System configured to transmit downlink communication data from a mobile communication network (100) to a plurality of internet-of-things communication devices (20),
the system comprising the mobile communication network (100) and the plurality of internet-of-things communication devices (20), and the mobile communication network (100) comprising an access network (110) and a core network (120), wherein the access network (110) comprises at least one radio cell (10) and a base station entity (111) associated with the at least one radio cell (10), wherein the mobile communication network is configured to transmit the communication data using a radio interface between the base station entity (111) and the plurality of internet-of-things communication devices (20), the radio interface having a plurality of physical resource blocks (200) such that each physical resource block of the plurality of physical resource blocks (200) corresponds to specific radio transmission resources, having a defined frequency range,
wherein the base station entity is configured to assign and/or associate a transmission power level (300) to each physical resource block of the plurality of physical resource blocks (200),
wherein the plurality of internet-of-things communication devices (20) at least comprises a first internet-of-things communication device (21), and at least a second internet-of-things communication device (22),
wherein the base station entity (111) is configured to receive or obtain a coverage information or a coverage class information regarding the first internet-of-things communication device (21) and regarding the second internet-of-things communication device (22), the coverage information or the coverage class information regarding the first and second internet-of-things communication devices (21, 22) indicating a lower coverage class or a lower coverage level (311, 312, 313) of the first internet-of-things communication device (21) compared to the second internet-of-things communication device (22),
wherein, in order to transmit a first part of the downlink communication data to the first internet-of-things communication device (21) and a second part of the downlink communication data to the second internet-of-things communication device (22), the system is configured such that:
-- a physical resource block (201) and an additional physical resource block (202) are defined by the base station entity (111) to transmit the first and second part of the downlink communication data, wherein the transmission power level (300) assigned and/or associated to the physical resource block (201) is higher compared to the transmission power level (300) assigned and/or associated to the additional physical resource block (202),
-- the first part of the downlink communication data is transmitted, by the base station entity (111), using the physical resource block (201), and the second part of the downlink communication data is transmitted, by the base station entity (111), using the additional physical resource block (202),
the system being **characterized in that** the transmission power level (300) of the additional physical resource block (202) is lower compared to the transmission power level (300) of the physical resource block (201), due to the additional physical resource block (202) being operated in a guardband portion of the frequency range used, by the base station entity (111), for the physical resource blocks (200).

8. Program comprising a computer readable program code which, when executed on a network component of a mobile communication network (100) causes the network component of the mobile communication network (100) to perform a method according to one of claims 1 to 5.

9. Storage medium storing a computer program product for transmitting downlink communication data from a mobile communication network (100) to a plurality of internet-of-things communication devices (20), the computer program product comprising program code which, when executed on a network component of a mobile communication network (100) causes the network component of the mobile communication network (100) to perform a method according to one of claims 1 to 5.

## Patentansprüche

1. Verfahren zum Senden von Downlink-Kommunikationsdaten von einem Mobilkommunikationsnetz (100) zu mehreren Internet-of-Things-Kommunikationsvorrichtungen (20),
wobei das Mobilkommunikationsnetz (100) ein Zugangsnetz (110) und ein Kernnetz (120) umfasst, wobei das Zugangsnetz (110) mindestens eine Funkzelle (10) und eine Basisstationsentität (111), die mit der mindestens einen Funkzelle (10) verknüpft ist, umfasst,
wobei die Kommunikationsdaten unter Verwendung einer Funkschnittstelle zwischen der Basisstationsentität (111) und den mehreren Internet-of-Things-Kommunikationsvorrichtungen (20) gesendet werden, wobei die Funkschnittstelle mehrere physische Ressourcenblöcke (200) aufweist, dergestalt, dass jeder physische Ressourcenblock der mehreren physischen Ressourcenblöcke (200) spezifischen Funkübertragungsressourcen entspricht, die einen definierten Frequenzbereich aufweisen,
wobei durch die Basisstationsentität (111) jedem physischen Ressourcenblock der mehreren physischen Ressourcenblöcke (200) ein Sendeleistungspegel (300) zugewiesen und/oder mit diesem verknüpft wird,
wobei die mehreren Internet-of-Things-Kommunikationsvorrichtungen (20) mindestens eine erste Internet-of-Things-Kommunikationsvorrichtung (21) und mindestens eine zweite Internet-of-Things-Kommunikationsvorrichtung (22) umfassen,
wobei die Basisstationsentität (111) eine Versorgungsbereichsinformation oder eine Versorgungsbereichsklasseninformation bezüglich der ersten Internet-of-Things-Kommunikationsvorrichtung (21) und bezüglich der zweiten Internet-of-Things-Kommunikationsvorrichtung (22) empfängt oder erhält, wobei die Versorgungsbereichsinformation oder die Versorgungsbereichsklasseninformation bezüglich der ersten und der zweiten Internet-of-Things-Kommunikationsvorrichtung (21, 22) eine niedrigere Versorgungsbereichsklasse oder einen niedrigeren Versorgungsbereichsgrad (311, 312, 313) der ersten Internet-of-Things-Kommunikationsvorrichtung (21) im Vergleich zu der zweiten Internet-of-Things-Kommunikationsvorrichtung (22) anzeigt,
wobei, um einen ersten Teil der Downlink-Kommunikationsdaten an die erste Internet-of-Things-Kommunikationsvorrichtung (21) und einen zweiten Teil der Downlink-Kommunikationsdaten an die zweite Internet-of-Things-Kommunikationsvorrichtung (22) zu senden, das Verfahren die folgenden Schritte umfasst:
- in einem ersten Schritt werden ein physischer Ressourcenblock (201) und ein zusätzlicher physischer Ressourcenblock (202) durch die Basisstationsentität (111) definiert, um den ersten und den zweiten Teil der Downlink-Kommunikationsdaten zu senden, wobei der dem physischen Ressourcenblock (201) zugewiesene und/oder mit ihm verknüpfte Sendeleistungspegel (300) höher ist als der dem zusätzlichen physischen Ressourcenblock (202) zugewiesene und/oder mit ihm verknüpfte Sendeleistungspegel (300),
- in einem zweiten Schritt, der auf den ersten Schritt folgt, wird der erste Teil der Downlink-Kommunikationsdaten durch die Basisstationsentität (111) unter Verwendung des physischen Ressourcenblocks (201) gesendet, und der zweite Teil der Downlink-Kommunikationsdaten wird durch die Basisstationsentität (111) unter Verwendung des zusätzlichen physischen Ressourcenblocks (202) gesendet,
wobei das Verfahren **dadurch gekennzeichnet ist, dass** wobei der Sendeleistungspegel (300) des zusätzlichen physischen Ressourcenblocks (202) im Vergleich zu dem Sendeleistungspegel (300) des physischen Ressourcenblocks (201) niedriger ist, da der zusätzliche physische Ressourcenblock (202) in einem Schutzbandabschnitt des Frequenzbereichs betrieben wird, der durch die Basisstationsentität (111) für die physischen Ressourcenblöcke (200) verwendet wird.

2. Verfahren nach Anspruch 1, bei dem der Sendeleistungspegel (300) des physischen Ressourcenblocks (201) höher ist als der Sendeleistungspegel (300) des zusätzlichen physischen Ressourcenblocks (202), da der physische Ressourcenblock (201) durch die Basisstationsentität (111) in einem leistungsgesteigerten Modus betrieben wird, wobei der leistungsgesteigerte Modus insbesondere einem Sendeleistungspegel (300) entspricht, der um 1 dB oder um 2 dB oder um 3 dB oder um 4 dB oder um 5 dB oder um 6 dB im Vergleich zu allen oder mindestens einem Teil der mehreren physischen Ressourcenblöcke (200) erhöht ist.

3. Verfahren nach einem der vorangehenden Ansprüche, wobei der physische Ressourcenblock (201) als ein physischer Anker-Ressourcenblock dient und mindestens einen schmalbandigen physischen Steuerkanal (Narrowband Physical Control Channel), insbesondere den schmalbandigen physischen Rundsendekanal (Narrowband Physical Broadcast Channel), enthält oder transportiert, und wobei der zusätzliche physische Ressourcenblock (202) als ein komplementärer physischer Ressourcenblock dient und den schmalbandigen physischen gemeinsam genutzten Downlink-Kanal (Narrowband Physical Downlink Shared Channel) enthält oder transportiert.

4. Verfahren nach einem der vorangehenden Ansprüche, wobei sich die Versorgungsbereichsklasse oder der Versorgungsbereichsgrad (311, 312, 313) der ersten Internet-of-Things-Kommunikationsvorrichtung (21) und die Versorgungsbereichsklasse oder der Versorgungsbereichsgrad (311, 312, 313) der zweiten Internet-of-Things-Kommunikationsvorrichtung (22) sowie die Versorgungsbereichsinformation oder eine Versorgungsbereichsklasseninformation bezüglich der ersten und der zweiten Internet-of-Things-Kommunikationsvorrichtung (21, 22) auf den Kopplungsverlust oder den maximalen Kopplungsverlust der Funkübertragung zwischen der Basisstationsentität (111) und der ersten und/oder der zweiten Internet-of-Things-Kommunikationsvorrichtung (21, 22) beziehen.

5. Verfahren nach einem der vorangehenden Ansprüche, wobei sich die Versorgungsbereichsinformation oder die Versorgungsbereichsklasseninformation bezüglich der ersten und der zweiten Internet-of-Things-Kommunikationsvorrichtung (21, 22) auf eine bestimmte Versorgungsbereichsklasse oder einen bestimmten Versorgungsbereichsgrad aus einem Satz von Versorgungsbereichsklassen oder Versorgungsbereichsgraden beziehen, wobei der Satz von Versorgungsbereichsklassen oder Versorgungsbereichsgraden mindestens eine erste Versorgungsbereichsklasse oder einen ersten Versorgungsbereichsgrad (311), insbesondere in Bezug auf einen extremen Versorgungsbereich, eine zweite Versorgungsbereichsklasse oder einen zweiten Versorgungsbereichsgrad (312), insbesondere in Bezug auf einen erweiterten Versorgungsbereich, und eine dritte Versorgungsbereichsklasse oder einen dritten Versorgungsbereichsgrad (313), insbesondere in Bezug auf einen normalen Versorgungsbereich, umfasst.

6. Mobilkommunikationsnetz (100), das so eingerichtet ist, dass es Downlink-Kommunikationsdaten von dem Mobilkommunikationsnetz (100) an mehrere Internet-of-Things-Kommunikationsgeräte (20) sendet,
wobei das Mobilkommunikationsnetz (100) ein Zugangsnetz (110) und ein Kernnetz (120) umfasst, wobei das Zugangsnetz (110) mindestens eine Funkzelle (10) und eine Basisstationsentität (111), die mit der mindestens einen Funkzelle (10) verknüpft ist, umfasst,
wobei das Mobilkommunikationsnetz so eingerichtet ist, dass es die Kommunikationsdaten unter Verwendung einer Funkschnittstelle zwischen der Basisstationsentität (111) und den mehreren Internet-of-Things-Kommunikationsvorrichtungen (20) sendet, wobei die Funkschnittstelle mehrere physische Ressourcenblöcke (200) aufweist, dergestalt, dass jeder physische Ressourcenblock der mehreren physischen Ressourcenblöcke (200) spezifischen Funkübertragungsressourcen entspricht, die einen definierten Frequenzbereich aufweisen,
wobei die Basisstationsentität so eingerichtet ist, dass sie jedem physischen Ressourcenblock der mehreren physischen Ressourcenblöcke (200) einen Sendeleistungspegel (300) zuweist und/oder mit diesem verknüpft,
wobei die mehreren Internet-of-Things-Kommunikationsvorrichtungen (20) mindestens eine erste Internet-of-Things-Kommunikationsvorrichtung (21) und mindestens eine zweite Internet-of-Things-Kommunikationsvorrichtung (22) umfassen,
wobei die Basisstationsentität (111) so eingerichtet ist, dass sie eine Versorgungsbereichsinformation oder eine Versorgungsbereichsklasseninformation bezüglich der ersten Internet-of-Things-Kommunikationsvorrichtung (21) und bezüglich der zweiten Internet-of-Things-Kommunikationsvorrichtung (22) empfängt oder erhält, wobei die Versorgungsbereichsinformation oder die Versorgungsbereichsklasseninformation bezüglich der ersten und der zweiten Internet-of-Things-Kommunikationsvorrichtung (21, 22) eine niedrigere Versorgungsbereichsklasse oder einen niedrigeren Versorgungsbereichsgrad (311, 312, 313) der ersten Internet-of-Things-Kommunikationsvorrichtung (21) im Vergleich zu der zweiten Internet-of-Things-Kommunikationsvorrichtung (22) anzeigt,
wobei, um einen ersten Teil der Downlink-Kommunikationsdaten an die erste Internet-of-Things-Kommunikationsvorrichtung (21) und einen zweiten Teil der Downlink-Kommunikationsdaten an die zweite Internet-of-Things-Kommunikationsvorrichtung (22) zu senden, das Mobilkommunikationsnetz (100) so eingerichtet ist, dass:
- ein physischer Ressourcenblock (201) und ein zusätzlicher physischer Ressourcenblock (202) durch die Basisstationsentität (111) definiert werden, um den ersten und den zweiten Teil der Downlink-Kommunikationsdaten zu senden, wobei der dem physischen Ressourcenblock (201) zugewiesene und/oder mit ihm verknüpfte Sendeleistungspegel (300) höher ist als der dem zusätzlichen physischen Ressourcenblock (202) zugewiesene und/oder mit ihm verknüpfte Sendeleistungspegel (300),
- der erste Teil der Downlink-Kommunikationsdaten durch die Basisstationsentität (111) unter Verwendung des physischen Ressourcenblocks (201) gesendet wird und der zweite Teil der Downlink-Kommunikationsdaten durch die Basisstationsentität (111) unter Verwendung des zusätzlichen physischen Ressourcenblocks (202) gesendet wird,
wobei das Mobilkommunikationsnetz **dadurch gekennzeichnet ist, dass** der Sendeleistungspegel (300) des zusätzlichen physischen Ressourcenblocks (202) im Vergleich zu dem Sendeleistungspegel (300) des physischen Ressourcenblocks (201) niedriger ist, da der zusätzliche physische Ressourcenblock (202) in einem Schutzbandabschnitt des Frequenzbereichs betrieben wird, der durch die Basisstationsentität (111) für die physischen Ressourcenblöcke (200) verwendet wird.

7. System, das dafür eingerichtet ist, Downlink-Kommunikationsdaten von einem Mobilkommunikationsnetz (100) an mehrere Internet-of-Things-Kommunikationsvorrichtungen (20) zu senden,
wobei das System das Mobilkommunikationsnetz (100) und die mehreren Internet-of-Things-Kommunikationsvorrichtungen (20) umfasst und das Mobilkommunikationsnetz (100) ein Zugangsnetz (110) und ein Kernnetz (120) umfasst,
wobei das Zugangsnetz (110) mindestens eine Funkzelle (10) und eine Basisstationsentität (111) umfasst, die mit der mindestens einen Funkzelle (10) verknüpft ist,
wobei das Mobilkommunikationsnetz so eingerichtet ist, dass es die Kommunikationsdaten unter Verwendung einer Funkschnittstelle zwischen der Basisstationsentität (111) und den mehreren Internet-of-Things-Kommunikationsvorrichtungen (20) sendet, wobei die Funkschnittstelle mehrere physische Ressourcenblöcke (200) aufweist, dergestalt, dass jeder physische Ressourcenblock der mehreren physischen Ressourcenblöcke (200) spezifischen Funkübertragungsressourcen entspricht, die einen definierten Frequenzbereich aufweisen,
wobei die Basisstationsentität so eingerichtet ist, dass sie jedem physischen Ressourcenblock der mehreren physischen Ressourcenblöcke (200) einen Sendeleistungspegel (300) zuweist und/oder mit diesem verknüpft,
wobei die mehreren Internet-of-Things-Kommunikationsvorrichtungen (20) mindestens eine erste Internet-of-Things-Kommunikationsvorrichtung (21) und mindestens eine zweite Internet-of-Things-Kommunikationsvorrichtung (22) umfassen,
wobei die Basisstationsentität (111) so eingerichtet ist, dass sie eine Versorgungsbereichsinformation oder eine Versorgungsbereichsklasseninformation bezüglich der ersten Internet-of-Things-Kommunikationsvorrichtung (21) und bezüglich der zweiten Internet-of-Things-Kommunikationsvorrichtung (22) empfängt oder erhält, wobei die Versorgungsbereichsinformation oder die Versorgungsbereichsklasseninformation bezüglich der ersten und der zweiten Internet-of-Things-Kommunikationsvorrichtung (21, 22) eine niedrigere Versorgungsbereichsklasse oder einen niedrigeren Versorgungsbereichsgrad (311, 312, 313) der ersten Internet-of-Things-Kommunikationsvorrichtung (21) im Vergleich zu der zweiten Internet-of-Things-Kommunikationsvorrichtung (22) anzeigt,
wobei, um einen ersten Teil der Downlink-Kommunikationsdaten an die erste Internet-of-Things-Kommunikationsvorrichtung (21) und einen zweiten Teil der Downlink-Kommunikationsdaten an die zweite Internet-of-Things-Kommunikationsvorrichtung (22) zu senden, das System (22) so eingerichtet ist, dass:
- ein physischer Ressourcenblock (201) und ein zusätzlicher physischer Ressourcenblock (202) durch die Basisstationsentität (111) definiert werden, um den ersten und den zweiten Teil der Downlink-Kommunikationsdaten zu senden, wobei der dem physischen Ressourcenblock (201) zugewiesene und/oder mit ihm verknüpfte Sendeleistungspegel (300) höher ist als der dem zusätzlichen physischen Ressourcenblock (202) zugewiesene und/oder mit ihm verknüpfte Sendeleistungspegel (300),
- der erste Teil der Downlink-Kommunikationsdaten durch die Basisstationsentität (111) unter Verwendung des physischen Ressourcenblocks (201) gesendet wird und der zweite Teil der Downlink-Kommunikationsdaten durch die Basisstationsentität (111) unter Verwendung des zusätzlichen physischen Ressourcenblocks (202) gesendet wird,
wobei das System **dadurch gekennzeichnet ist, dass** der Sendeleistungspegel (300) des zusätzlichen physischen Ressourcenblocks (202) im Vergleich zu dem Sendeleistungspegel (300) des physischen Ressourcenblocks (201) niedriger ist, da der zusätzliche physische Ressourcenblock (202) in einem Schutzbandabschnitt des Frequenzbereichs betrieben wird, der durch die Basisstationsentität (111) für die physischen Ressourcenblöcke (200) verwendet wird.

8. Programm, das einen computerlesbaren Programmcode umfasst, der, wenn er auf einer Netzkomponente eines Mobilkommunikationsnetzes (100) ausgeführt wird, die Netzkomponente des Mobilkommunikationsnetzes (100) veranlasst, ein Verfahren nach einem der Ansprüche 1 bis 5 auszuführen.

9. Speichermedium, das ein Computerprogrammprodukt zum Senden von Downlink-Kommunikationsdaten von einem Mobilkommunikationsnetz (100) zu mehreren Internet-of-Things-Kommunikationsvorrichtungen (20) speichert, wobei das Computerprogrammprodukt Programmcode umfasst, der, wenn er auf einer Netzkomponente eines Mobilkommunikationsnetzes (100) ausgeführt wird, die Netzkomponente des Mobilkommunikationsnetzes (100) veranlasst, ein Verfahren nach einem der Ansprüche 1 bis 5 auszuführen.

## Revendications

1. Procédé de transmission de données de communication de liaison descendante d'un réseau de communication mobile (100) à une pluralité de dispositifs de communication de l'Internet des objets (20),
le réseau de communication mobile (100) comprenant un réseau d'accès (110) et un réseau central (120), dans lequel le réseau d'accès (110) comprend au moins une cellule radio (10) et une entité de station de base (111) associée à l'au moins une cellule radio (10),
dans lequel les données de communication sont transmises à l'aide d'une interface radio entre l'entité de station de base (111) et la pluralité de dispositifs de communication de l'Internet des objets (20), l'interface radio ayant une pluralité de blocs de ressources physiques (200) de sorte que chaque bloc de ressources physiques de la pluralité de blocs de ressources physiques (200) correspond à des ressources de radiotransmission spécifiques, ayant une plage de fréquence définie,
dans lequel un niveau de puissance de transmission (300) est attribué et/ou associé, par l'entité de station de base (111), à chaque bloc de ressources physiques de la pluralité de blocs de ressources physiques (200),
dans lequel la pluralité de dispositifs de communication de l'Internet des objets (20) comprend au moins un premier dispositif de communication de l'Internet des objets (21), et au moins un second dispositif de communication de l'Internet des objets (22),
dans lequel l'entité de station de base (111) reçoit ou obtient une information de couverture ou une information de classe de couverture concernant le premier dispositif de communication de l'Internet des objets (21) et concernant le second dispositif de communication de l'Internet des objets (22), l'information de couverture ou l'information de classe de couverture concernant les premier et second dispositifs de communication de l'Internet des objets (21, 22) indiquant une classe de couverture inférieure ou un niveau de couverture inférieur (311, 312, 313) du premier dispositif de communication de l'Internet des objets (21) en comparaison avec le second dispositif de communication de l'Internet des objets (22),
dans lequel, afin de transmettre une première partie des données de communication de liaison descendante au premier dispositif de communication de l'Internet des objets (21) et une seconde partie des données de communication de liaison descendante au second dispositif de communication de l'Internet des objets (22), le procédé comprend les étapes suivantes :
- dans une première étape, un bloc de ressources physiques (201) et un bloc de ressources physiques supplémentaire (202) sont définis par l'entité de station de base (111) pour transmettre les première et seconde parties des données de communication de liaison descendante, dans lequel le niveau de puissance de transmission (300) attribué et/ou associé au bloc de ressources physiques (201) est plus élevé en comparaison avec le niveau de puissance de transmission (300) attribué et/ou associé au bloc de ressources physiques supplémentaire (202),
- dans une seconde étape, ultérieure à la première étape, la première partie des données de communication de liaison descendante est transmise, par l'entité de station de base (111), à l'aide du bloc de ressources physiques (201), et la seconde partie des données de communication de liaison descendante est transmise, par l'entité de station de base (111), à l'aide du bloc de ressources physiques supplémentaire (202),
le procédé étant **caractérisé en ce que** le niveau de puissance de transmission (300) du bloc de ressources physiques supplémentaire (202) est plus bas en comparaison avec le niveau de puissance de transmission (300) du bloc de ressources physiques (201), en raison du fait que le bloc de ressources physiques supplémentaire (202) est mis en fonctionnement dans une portion de bande de garde de la plage de fréquence utilisée, par l'entité de station de base (111), pour les blocs de ressources physiques (200).

2. Procédé selon la revendication 1, dans lequel le niveau de puissance de transmission (300) du bloc de ressources physiques (201) est plus élevé en comparaison avec le niveau de puissance de transmission (300) du bloc de ressources physiques supplémentaire (202), en raison du fait que le bloc de ressources physiques (201) est mis en fonctionnement, par l'entité de station de base (111), dans un mode d'amplification de puissance, le mode d'amplification de puissance correspondant spécialement à un niveau de puissance de transmission (300) qui est accru de 1 dB ou de 2 dB ou de 3 dB ou de 4 dB ou de 5 dB ou de 6 dB en comparaison avec l'ensemble ou au moins une partie de la pluralité de blocs de ressources physiques (200).

3. Procédé selon l'une des revendications précédentes, dans lequel le bloc de ressources physiques (201) sert de bloc de ressources physiques d'ancrage et contient ou porte au moins un canal de commande physique à bande étroite, spécialement le canal physique de diffusion à bande étroite, et dans lequel le bloc de ressources physiques supplémentaire (202) sert de bloc de ressources physiques complémentaire et contient ou porte le canal physique partagé de liaison descendante à bande étroite.

4. Procédé selon l'une des revendications précédentes, dans lequel la classe de couverture ou le niveau de couverture (311, 312, 313) du premier dispositif de communication de l'Internet des objets (21) et la classe de couverture ou le niveau de couverture (311, 312, 313) du second dispositif de communication de l'Internet des objets (22), ainsi que l'information de couverture ou une information de classe de couverture concernant les premier et second dispositifs de communication de l'Internet des objets (21, 22) sont liés à l'affaiblissement de couplage ou l'affaiblissement de couplage maximal de la radiotransmission entre l'entité de station de base (111), et le premier et/ou le second dispositif de communication de l'Internet des objets (21, 22), respectivement.

5. Procédé selon l'une des revendications précédentes, dans lequel l'information de couverture ou l'information de classe de couverture concernant les premier et second dispositifs de communication de l'Internet des objets (21, 22) est liée à une classe de couverture ou un niveau de couverture parmi un ensemble de classes de couverture ou de niveaux de couverture, l'ensemble de classes de couverture ou de niveaux de couverture comprenant au moins une première classe de couverture ou un premier niveau de couverture (311), concernant spécialement une couverture extrême, une deuxième classe de couverture ou un deuxième niveau de couverture (312), concernant spécialement une couverture étendue, et une troisième classe de couverture ou un troisième niveau de couverture (313), concernant spécialement une couverture normale.

6. Réseau de communication mobile (100) configuré pour transmettre des données de communication de liaison descendante du réseau de communication mobile (100) à une pluralité de dispositifs de communication de l'Internet des objets (20),
le réseau de communication mobile (100) comprenant un réseau d'accès (110) et un réseau central (120), dans lequel le réseau d'accès (110) comprend au moins une cellule radio (10) et une entité de station de base (111) associée à l'au moins une cellule radio (10),
dans lequel le réseau de communication mobile est configuré pour transmettre les données de communication à l'aide d'une interface radio entre l'entité de station de base (111) et la pluralité de dispositifs de communication de l'Internet des objets (20), l'interface radio ayant une pluralité de blocs de ressources physiques (200) de sorte que chaque bloc de ressources physiques de la pluralité de blocs de ressources physiques (200) correspond à des ressources de radiotransmission spécifiques, ayant une plage de fréquence définie,
dans lequel l'entité de station de base est configurée pour attribuer et/ou associer un niveau de puissance de transmission (300), à chaque bloc de ressources physiques de la pluralité de blocs de ressources physiques (200),
dans lequel la pluralité de dispositifs de communication de l'Internet des objets (20) comprend au moins un premier dispositif de communication de l'Internet des objets (21), et au moins un second dispositif de communication de l'Internet des objets (22),
dans lequel l'entité de station de base (111) est configurée pour recevoir ou obtenir une information de couverture ou une information de classe de couverture concernant le premier dispositif de communication de l'Internet des objets (21) et concernant le second dispositif de communication de l'Internet des objets (22), l'information de couverture ou l'information de classe de couverture concernant les premier et second dispositifs de communication de l'Internet des objets (21, 22) indiquant une classe de couverture inférieure ou un niveau de couverture inférieur (311, 312, 313) du premier dispositif de communication de l'Internet des objets (21) en comparaison avec le second dispositif de communication de l'Internet des objets (22),
dans lequel, afin de transmettre une première partie des données de communication de liaison descendante au premier dispositif de communication de l'Internet des objets (21) et une seconde partie des données de communication de liaison descendante au second dispositif de communication de l'Internet des objets (22), le réseau de communication mobile (100) est configuré de sorte que :
- un bloc de ressources physiques (201) et un bloc de ressources physiques supplémentaire (202) sont définis par l'entité de station de base (111) pour transmettre les première et seconde parties des données de communication de liaison descendante, dans lequel le niveau de puissance de transmission (300) attribué et/ou associé au bloc de ressources physiques (201) est plus élevé en comparaison avec le niveau de puissance de transmission (300) attribué et/ou associé au bloc de ressources physiques supplémentaire (202),
- la première partie des données de communication de liaison descendante est transmise, par l'entité de station de base (111), à l'aide du bloc de ressources physiques (201), et la seconde partie des données de communication de liaison descendante est transmise, par l'entité de station de base (111), à l'aide du bloc de ressources physiques supplémentaire (202),
le réseau de communication mobile étant **caractérisé en ce que** le niveau de puissance de transmission (300) du bloc de ressources physiques supplémentaire (202) est plus bas en comparaison avec le niveau de puissance de transmission (300) du bloc de ressources physiques (201), en raison du fait que le bloc de ressources physiques supplémentaire (202) est mis en fonctionnement dans une portion de bande de garde de la plage de fréquence utilisée, par l'entité de station de base (111), pour les blocs de ressources physiques (200).

7. Système configuré pour transmettre des données de communication de liaison descendante d'un réseau de communication mobile (100) à une pluralité de dispositifs de communication de l'Internet des objets (20),
le système comprenant le réseau de communication mobile (100) et la pluralité de dispositifs de communication de l'Internet des objets (20), et le réseau de communication mobile (100) comprenant un réseau d'accès (110) et un réseau central (120), dans lequel le réseau d'accès (110) comprend au moins une cellule radio (10) et une entité de station de base (111) associée à l'au moins une cellule radio (10),
dans lequel le réseau de communication mobile est configuré pour transmettre les données de communication à l'aide d'une interface radio entre l'entité de station de base (111) et la pluralité de dispositifs de communication de l'Internet des objets (20), l'interface radio ayant une pluralité de blocs de ressources physiques (200) de sorte que chaque bloc de ressources physiques de la pluralité de blocs de ressources physiques (200) correspond à des ressources de radiotransmission spécifiques, ayant une plage de fréquence définie,
dans lequel l'entité de station de base est configurée pour attribuer et/ou associer un niveau de puissance de transmission (300), à chaque bloc de ressources physiques de la pluralité de blocs de ressources physiques (200),
dans lequel la pluralité de dispositifs de communication de l'Internet des objets (20) comprend au moins un premier dispositif de communication de l'Internet des objets (21), et au moins un second dispositif de communication de l'Internet des objets (22),
dans lequel l'entité de station de base (111) est configurée pour recevoir ou obtenir une information de couverture ou une information de classe de couverture concernant le premier dispositif de communication de l'Internet des objets (21) et concernant le second dispositif de communication de l'Internet des objets (22), l'information de couverture ou l'information de classe de couverture concernant les premier et second dispositifs de communication de l'Internet des objets (21, 22) indiquant une classe de couverture inférieure ou un niveau de couverture inférieur (311, 312, 313) du premier dispositif de communication de l'Internet des objets (21) en comparaison avec le second dispositif de communication de l'Internet des objets (22),
dans lequel, afin de transmettre une première partie des données de communication de liaison descendante au premier dispositif de communication de l'Internet des objets (21) et une seconde partie des données de communication de liaison descendante au second dispositif de communication de l'Internet des objets (22), le système est configuré de sorte que :
- un bloc de ressources physiques (201) et un bloc de ressources physiques supplémentaire (202) sont définis par l'entité de station de base (111) pour transmettre les première et seconde parties des données de communication de liaison descendante, dans lequel le niveau de puissance de transmission (300) attribué et/ou associé au bloc de ressources physiques (201) est plus élevé en comparaison avec le niveau de puissance de transmission (300) attribué et/ou associé au bloc de ressources physiques supplémentaire (202),
- la première partie des données de communication de liaison descendante est transmise, par l'entité de station de base (111), à l'aide du bloc de ressources physiques (201), et la seconde partie des données de communication de liaison descendante est transmise, par l'entité de station de base (111), à l'aide du bloc de ressources physiques supplémentaire (202),
le système étant **caractérisé en ce que** le niveau de puissance de transmission (300) du bloc de ressources physiques supplémentaire (202) est plus bas en comparaison avec le niveau de puissance de transmission (300) du bloc de ressources physiques (201), en raison du fait que le bloc de ressources physiques supplémentaire (202) est mis en fonctionnement dans une portion de bande de garde de la plage de fréquence utilisée, par l'entité de station de base (111), pour les blocs de ressources physiques (200).

8. Programme comprenant un code de programme lisible par ordinateur qui, lorsqu'il est exécuté sur un composant de réseau d'un réseau de communication mobile (100), amène le composant de réseau du réseau de communication mobile (100) à réaliser un procédé selon l'une des revendications 1 à 5.

9. Support de stockage stockant un produit de programme d'ordinateur pour la transmission de données de communication de liaison descendante d'un réseau de communication mobile (100) à une pluralité de dispositifs de communication de l'Internet des objets (20), le produit de programme d'ordinateur comprenant un code de programme qui, lorsqu'il est exécuté sur un composant de réseau d'un réseau de communication mobile (100), amène le composant de réseau du réseau de communication mobile (100) à réaliser un procédé selon l'une des revendications 1 à 5.
